# FASCICULE DE BREVET EUROPEEN

(11) **EP 0 895 700 B1**
(45) Date de publication et mention de la délivrance du brevet: **06.08.2003**
(21) Numéro de dépôt: 97921890.6
(22) Date de dépôt: 25.04.1997
(51) Int. Cl.: H04Q 7/32, H04N 1/00

(54) **Téléphone radio portatif avec adaptateur de télécopie**
Tragbares Funktelefon mit einem Fax-Adapter
Portable radio telephone with a fax adaptor

(30) Priorité: 25.04.1996 FR 9605241
(43) Date de publication de la demande: 10.02.1999
(73) Titulaire: SAGEM S.A., 75015 Paris (FR)
(72) Inventeur: FEISSEL, Sophie, F-75016 Paris (FR); HEURTAUX, Frédéric, F-13610 Le-Puy-Sainte-Reparade (FR)
(74) Mandataire: Bloch, Gérard
(86) Numéro de dépôt international: FR9700748
(87) Numéro de publication internationale: WO97040637

(56) Documents cités:
- EP-A- 0 499 012
- EP-A- 0 579 164
- EP-A- 0 651 543
- WO-A-95/28800

## Description

En téléphonie mobile, par exemple de type GSM, un téléphone radio portatif n'offre généralement pas toutes les commodités que peut procurer un ensemble de téléphonie de bureau. En particulier, si l'utilisateur du téléphone portatif radio souhaite émettre ou recevoir une télécopie, il est contraint soit de se déplacer près d'un télécopieur, soit de le relier à un ordinateur, éventuellement portable, à une imprimante à un analyseur d'image, ou autre équipement de bureau. Cependant, quelle que soit la solution adoptée, la liberté de déplacement de l'utilisateur est alors restreinte ou il est soumis à un problème d'encombrement.

La présente invention vise à donner à l'utilisateur du téléphone radio portatif des moyens de recevoir ou d'émettre, en déplacement, une télécopie, sans équipement externe du type présenté ci-dessus.

EP-A-0 579 164 enseigne un appareil portable, que l'on pose sur un bureau et alimente par un cordon secteur. Le problème lié à la liberté de déplacement restreinte de l'utilisateur, évoqué ci-dessus, n'a donc pas à être posé puisque tout déplacement est hors de question.

WO 95 28 800A enseigne un télécopieur portable pourvu d'un dispositif de saisie d'image et d'un écran de visualisation de télécopie mais ne comportant pas de moyens de liaison radio.

EP 0 499 012A enseigne un télécopieur portable, raccordable par fil à un réseau de transmission.

EP 0 651 543A enseigne un terminal mobile comportant un écran interactif permettant de visualiser une portion d'une télécopie mémorisée localement.

Pour résoudre le problème évoqué ci-dessus, l'invention concerne un téléphone radio portatif comprenant un bloc radio, pouvant recevoir et fournir de deux côtés des signaux analogiques et des données numériques, un bloc correcteur et un bloc de traitement de données, des moyens de saisie et un bloc de contrôle, le bloc de traitement de données comprenant un adaptateur de débit et un adaptateur de télécopie, téléphone caractérisé par le fait qu'il comprend en outre une mémoire de stockage de données de télécopies, le bloc de contrôle étant agencé pour commander l'une au moins de deux fonctions, d'émission et de réception, radio, de ces données de télécopie, depuis, respectivement dans, la mémoire de stockage de données de télécopies, par commande, pour ladite émission, du transfert des dites données de la mémoire vers l'adaptateur de télécopie.

Par moyens de saisie, il faut entendre tous moyens notamment manuels et vocaux, pour entrer une commande dans le téléphone portable, tels que par exemple un clavier, un microphone ou encore un navigateur.

Grâce à l'invention, le téléphone portatif radio peut recevoir une télécopie, ainsi que, sous le contrôle du bloc de contrôle, stocker en mémoire les données de la télécopie et l'émettre par voie hertzienne, par exemple vers un télécopieur classique pour impression. De ce fait, le téléphone radio portatif s'apparente à un relais radio dans la transmission de télécopie.

De surcroît, l'utilisateur dudit téléphone peut être présent lors de l'impression de la télécopie par le télécopieur afin de recevoir celle-ci où il veut et donc en toute confidentialité.

Avantageusement il est prévu un écran de visualisation et le bloc de contrôle est agencé pour afficher à l'écran les données de la mémoire et les moyens de saisie sont pourvus de moyens pour, sous le contrôle du bloc de contrôle, faire défiler à l'écran les données.

Dans ce cas, le bloc de traitement de données de télécopie peut comporter des moyens de modification de télécopies et des moyens de création de télécopies, comprenant un sous-bloc d'édition associé au bloc de contrôle, à l'écran aux moyens de saisie et à la mémoire de données de télécopie.

Grâce à cela, l'utilisateur peut annoter ou effacer une erreur dans une télécopie.

On remarquera ainsi que le téléphone portatif radio de l'invention peut remplir la quasi totalité des fonctions d'un télécopieur, à savoir la réception, la création, la visualisation et l'émission de télécopies.

Dans une forme de réalisation préférée de l'invention, des moyens de transcodage, destinés à comprimer et à décomprimer les données de télécopie, sont associés à la mémoire de stockage des données d'une pluralité de télécopies, et des moyens de sélection de données de télécopies stockées sont intégrés au bloc de contrôle, les données sélectionnées pouvant ensuite être traitées.

Dans ce cas, l'utilisateur dispose d'un catalogue de télécopies archivées en mémoire sous forme de données comprimées.

Enfin, le bloc de traitement de données peut comporter des moyens pour supprimer de la mémoire des données de télécopie.

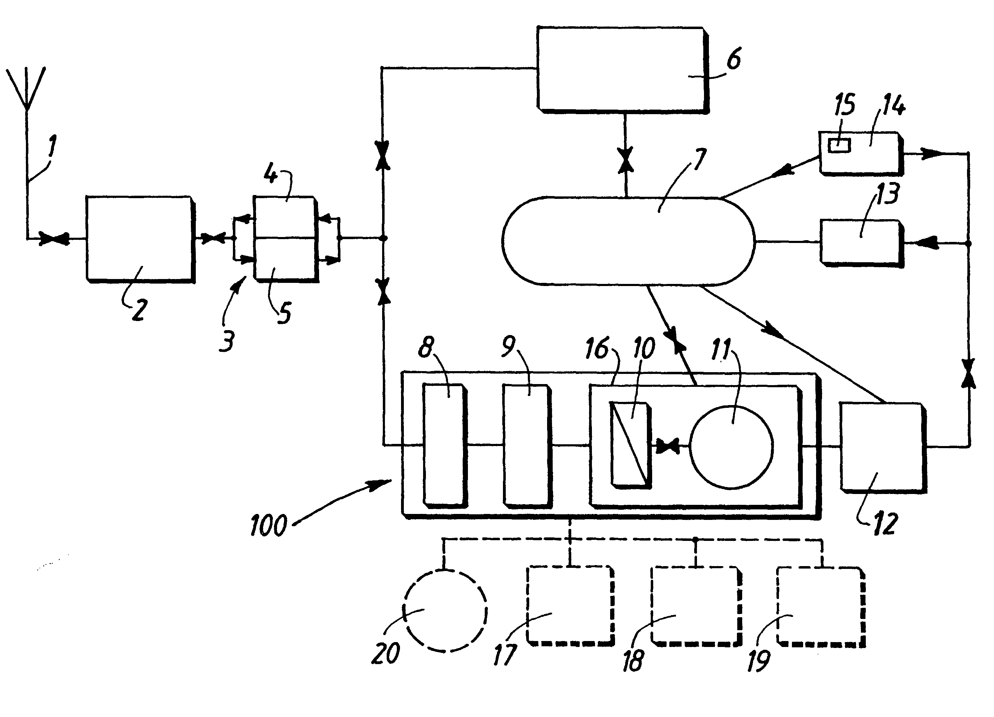

L'invention sera mieux comprise à l'aide de la description suivante, en référence à la figure unique annexée qui représente un schéma bloc fonctionnel du téléphone portatif radio de l'invention.

Le téléphone portatif radio comprend, relié d'un côté à une antenne 1, un bloc radio 2 destiné à recevoir et émettre par l'antenne des signaux analogiques, à décoder les signaux analogiques reçus en données numériques à traiter et à coder des données numériques traitées en signaux analogiques à émettre. D'un autre côté, le bloc radio 2 est relié à un bloc correcteur 3 comportant un sous-bloc 5 de correction d'erreurs de transmission radio et un sous-bloc 4 d'association d'un code de correction d'erreurs aux données numériques à coder, pouvant ainsi pré-corriger les données numériques avant transmission.

Un autre côté du bloc correcteur 3 destiné à recevoir les données numériques à pré-corriger et à émettre les données numériques corrigées est connecté à un bloc 6 de traitement de signaux de voix numérisés et, en parallèle, à un bloc 100 de traitement de données de télécopie.

Le bloc 6 de traitement de signaux de voix comprend des éléments classiques d'un téléphone portatif radio ordinaire, à savoir un codec de compression et de décompression des données numériques des signaux de voix numérisés, respectivement pour émission et pour réception des signaux de ladite voix, relié à un convertisseur analogique-numérique associé à un microphone et, en parallèle, à un convertisseur numérique-analogique associé à un haut-parleur.

En outre, le bloc 6 est connecté à un bloc de contrôle, en l'espèce un microprocesseur de commande 7.

Le bloc 100 de traitement de données de télécopie est relié d'un côté au bloc correcteur 3 et d'un autre côté au microprocesseur 7. Ce bloc 100 comporte une chaîne de transmission de données de télécopie comprenant en série et dans l'ordre, à partir du bloc correcteur 3, un adaptateur 8 de débit des données numériques pour la transmission, une machine à états 9 intégrant ici certaines des fonctions du protocole international T30 de télécopie, pour respecter les délais de télécopie, et faisant de ce fait office d'adaptateur de télécopie, et un sous-bloc mémoire 16 comprenant un organe de transcodage 10, pour comprimer ou décomprimer les données entrantes ou sortantes du sous-bloc mémoire 16, l'organe 10 étant associé à une mémoire 11 de stockage des données d'une pluralité de télécopies.

Le microprocesseur 7 est aussi relié à des moyens de saisie, ici un clavier de saisie 14 et, en parallèle, à l'écran de visualisation 13. En outre, le clavier 14 est ici pourvu d'une touche 15 de curseur d'écran pour faire défiler la télécopie à l'écran 13.

Après transmission le long de cette chaîne des données de télécopie a priori issues du bloc radio 2 (on verra plus loin que des télécopies peuvent être créées dans l'appareil), et corrigées par le bloc correcteur 3, le microprocesseur 7 peut commander un affichage de la télécopie à l'écran 13, et la touche de curseur 15 permet de faire défiler la télécopie à l'écran 13.

Le bloc 100 de traitement de données de télécopie comprend également des moyens de création de télécopie comportant un sous-bloc d'édition 12 associé au microprocesseur 7, à la mémoire 11, au clavier 14 et à l'écran 13.

Ce sous-bloc d'édition 12, pourvu de fonctions telles que celles d'un accessoire "Paintbrush" d'un logiciel d'exploitation (version 3.1) de la marque Microsoft Windows, explicité dans un document intitulé "Guide de l'utilisateur" édité par la marque Microsoft Corporation, est prévu pour tracer des graphiques, des caractères, des figures géométriques déterminées telles que des rectangles ou des cercles, et autres dessins.

Le microprocesseur 7 intègre des moyens pour sélectionner les données de l'une des télécopies stockées dans le sous-bloc mémoire 16.

Le sous-bloc édition 12 est muni de fonctions programmées pour modifier, avec des touches du clavier 14, une télécopie, préalablement sélectionnée par le microprocesseur 7 et affichée à l'écran 13, en traçant sur la télécopie des caractères ou des dessins, tels que ceux précités, ou pour effacer une zone de la télécopie, déterminée à l'aide du clavier 14.

Enfin, le bloc 100 de traitement de données de télécopie comprend une fonction pour supprimer les données d'une télécopie sélectionnée de la mémoire 11, en l'occurrence avec une touche spécifique du clavier 14.

Un utilisateur du téléphone portatif radio qui vient d'être décrit, peut, par voie hertzienne, outre appeler un correspondant ou recevoir un appel téléphonique, recevoir, traiter, réémettre, créer et émettre des signaux et des données de télécopie.

Le bloc radio 2 peut recevoir, avec l'antenne 1, des signaux de télécopie, les transformer en données numériques à corriger par le bloc correcteur 3 avant d'être traitées par le bloc 100. Ce bloc 100 de traitement de données de télécopie adapte les données reçues avec l'adaptateur de débit 8 et la machine à états 9, puis, dans le sous-bloc mémoire 16, les comprime et les stocke.

La mémoire 11 du sous-bloc 16 peut contenir une pluralité de télécopies, formant un catalogue de télécopies. L'une des télécopies peut être sélectionnée à l'aide du clavier 14, sous le contrôle du microprocesseur 7. Après décompression par le sous-bloc 10 de transcodage des données de la télécopie sélectionnée, l'écran 13 peut visualiser la télécopie que l'utilisateur peut modifier avec le sous-bloc d'édition 12, le clavier 14, et le microprocesseur 7, ou supprimer à l'aide du clavier 14 et sous le contrôle du microprocesseur 7.

L'utilisateur du téléphone portatif radio de l'invention peut également créer une télécopie à émettre, en utilisant, en coopération avec le microprocesseur 7, les fonctions du sous-bloc d'édition 12 et le clavier 14, tout en visualisant à l'écran 13 la télécopie créée.

Pour émettre une télécopie, créée ou stockée après réception,ou encore modifiée, les données de ladite télécopie, stockées dans la mémoire 11, sont comprimées ou décomprimées par l'organe de transcodage 10, si nécessaire, puis adaptées par la machine à états 9 et l'adaptateur de débit 8, associées à un code d'erreur dans le bloc correcteur 3, et enfin transformées en signaux analogiques de télécopie émis par voie hertzienne avec l'antenne 1.

Il est également prévu de pouvoir brancher le téléphone portatif radio, et plus précisément le bloc de traitement 100 décrit ci-dessus, à un ordinateur 17, un télécopieur 18, un analyseur d'image (scanneur) 19, ou autres équipements externes, en un point de connexion du bloc 100 variant selon le type d'équipement externe à brancher. Ainsi, on peut développer de multiples applications du téléphone de l'invention. La liaison, ici filaire, pourrait, également, être aérienne, ou par infrarouge par exemple. A titre d'exemple le téléphone, relié à un ordinateur personnel, peut en recevoir un fond de page de télécopie, le stocker, le compléter et l'émettre à volonté. De même, le téléphone peut transférer à l'ordinateur personnel des télécopies en mémoire.

On peut encore relier le téléphone à une mémoire de masse 20 externe, afin de stocker des données de télécopies hors du téléphone, dans le cas, par exemple où la mémoire 11 serait remplie mais que l'utilisateur ne souhaiterait supprimer aucune télécopie.

Le sous-bloc d'édition 12, en coopération avec le microprocesseur 7, pourrait intégrer une fonction de visualisation de LIC (Ligne d'Identification de la Communication), destinée à afficher à l'écran 13, uniquement les LIC du catalogue des télécopies reçues stockées.

Enfin, dans une forme de réalisation particulièrement complète du téléphone portatif radio de l'invention, le sous-bloc d'édition 12 intègre toutes les fonctions de base de l'accessoire du type "Paintbrush" et les fonctions classiques de traitement de texte.

## Revendications

1. Téléphone portatif radio comprenant un bloc radio (2), pouvant recevoir et fournir de deux côtés des signaux analogiques et des données numériques, un bloc correcteur (3) et un bloc (100) de traitement de données, des moyens de saisie (14) et un bloc de contrôle (7), le bloc (100) de traitement de données comprenant un adaptateur de débit (8) et un adaptateur de télécopie (9), téléphone **caractérisé par le fait qu'**il comprend en outre une mémoire de stockage de données d'une pluralité de télécopies (11, 16), le bloc de contrôle (7) comprenant des moyens pour sélectionner les données de l'une des télécopies stockées et commandant
• l'émission radio des données de télécopies depuis la mémoire de stockage (11, 16) par commande du transfert des données de la mémoire vers l'adaptateur de télécopie (9),
• la réception radio de données de télécopies dans la mémoire de stockage (11, 16).

2. Téléphone portatif radio selon la revendication 1 dans lequel le bloc de traitement (100) est agencé pour être relié à un équipement externe (17-20).

3. Téléphone portatif radio selon l'une des revendications 1 et 2, dans lequel sont prévus des moyens de transcodage (10), associés à la mémoire (11) et destinés à comprimer et décomprimer les données de télécopies, et des moyens de sélection de données de télécopies stockées, intégrés au bloc de contrôle (7).

4. Téléphone portatif radio selon l'une des revendications 1 à 3, dans lequel il est prévu un écran de visualisation (13) et le bloc de contrôle (7) est agencé pour afficher à l'écran (13) les données de la mémoire (11, 16).

5. Téléphone portatif radio selon la revendication 4, dans lequel les moyens de saisie (14) sont pourvus de moyens (15) pour, sous le contrôle du bloc de contrôle (7), faire défiler à l'écran (13) les documents.

6. Téléphone portatif radio selon l'une des revendications 1 à 5, dans lequel le bloc (100) de traitement de données de télécopies comporte des moyens de modification de télécopies comprenant un sous-bloc d'édition (12) associé au bloc de contrôle (7), à l'écran (13), aux moyens de saisie (14) et à la mémoire (11, 16) de stockage de données de télécopies.

7. Téléphone portatif radio selon l'une des revendications 1 à 6, dans lequel le bloc (100) de traitement de données de télécopies comporte des moyens de création de télécopies comprenant un sous-bloc d'édition (12) associé au bloc de contrôle (7), à l'écran (13), aux moyens de saisie (14) et à la mémoire (11, 16) de stockage de données de télécopies.

8. Téléphone portatif radio selon l'une des revendications 1 à 7, dans lequel le bloc (100) de traitement de données de télécopies comporte des moyens (14) pour supprimer de la mémoire (11, 16) des données de télécopies.

## Patentansprüche

1. Tragbares Funktelefon mit einem Funkblock (2) zum Empfangen und Abgeben von Analogsignalen und Digitaldaten in beiden Richtungen, einem Korregierblock (3) und einem Datenbearbeitungsblock (100), Erfassungsmitteln (14) und einem Steuerblock (7), wobei der Datenbearbeitungsblock (100) einen Leistungsadapter (8) und einen Telefaxadapter (9) umfaßt, **dadurch gekennzeichnet, daß** es außerdem einen Speicher zum Speichern von Daten einer Mehrzahl von Telefaxen (11, 16) umfaßt, wobei der Steuerblock (7) Mittel zum Auswählen der Daten von einem der gespeicherten Telefaxe umfaßt und
• die Funkabstrahlung der Telefaxdaten von dem Speicher (11, 16) durch Befehl zur Übertragung der Daten des Speichers zu dem Telefaxadapter (9),
• den Funkempfang von Telefaxdaten im Speicher (11, 16) steuert.

2. Tragbares Funktelefon nach Anspruch 1, in dem der Bearbeitungsblock (100) mit einem externen Gerät (17-20) verbindbar ist.

3. Tragbares Funktelefon nach einem der Ansprüche 1 und 2, in dem Umkodierungsmittel (10) vorgesehen sind, die dem Speicher (11) zugeordnet und zum Kompromieren und Dekompromieren der Telefaxdaten bestimmt sind, und in den Steuerblock (7) integrierte Mittel zur Auswahl gespeicherter Telefaxdaten.

4. Tragbares Funktelefon nach einem der Ansprüche 1 bis 3, in dem eine optische Anzeige (13) vorgesehen ist und der Steuerblock (7) die Daten des Speichers (11, 16) auf der Anzeige (13) anzeigen kann.

5. Tragbares Funktelefon nach Anspruch 4, in dem die Erfassungsmittel (14) mit Mitteln (15) zum Bildlauf der Schriftstücke auf der Anzeige (13) unter Steuerung des Steuerblockes (7) ausgestattet sind.

6. Tragbares Funktelefon nach einem der Ansprüche 1 bis 5, in dem der Telefaxdatenbearbeitungsblock (100) Mittel zur Abänderung von Telefaxen mit einem, dem Steuerblock (7), der Anzeige (13), den Erfassungsmitteln (14) und dem Speicher (11, 16) zur Speicherung von Telefaxdaten zugeordneten Aufbereitungs-Teilblock (12) umfaßt.

7. Tragbares Funktelefon nach einem der Ansprüche 1 bis 6, in dem der Telefaxdatenbearbeitungsblock (100) Mittel zur Erzeugung von Telefaxen mit einem, dem Steuerblock (7), der Anzeige (13), den Erfassungsmitteln (14) und dem Speicher (11, 16) zur Speicherung von Telefaxdaten zugeordneten Aufbereitungs-Teilblock (12) umfaßt.

8. Tragbares Funktelefon nach einem der Ansprüche 1 bis 7, in dem der Telefaxdatenbearbeitungsblock (100) Mittel (14) zum Unterdrücken von Telefaxdaten vom Speicher (11, 16) umfaßt.

## Claims

1. Portable radio telephone comprising a radio block (2), which can receive and provide analogue signals and digital data on two sides, a corrector block (3) and a data processing block (100), input means (14) and a supervisory block (7), the data processing block (100) comprising a rate adapter (8) and a facsimile adapter (9), telephone **characterized in that** it furthermore comprises a memory for storing data of a plurality of facsimiles (11, 16), the supervisory block (7) comprising means for selecting the data of one of the stored facsimiles and instructing
• the radio transmission of the facsimiles data from the storage memory (11, 16) by instructing the transfer of the data from the memory to the facsimile adapter (9),
• the radio reception of facsimiles data in the storage memory (11, 16).

2. Portable radio telephone according to Claim 1, in which the processing block (100) is designed to be linked to an external appliance (17-20).

3. Portable radio telephone according to one of Claims 1 and 2, in which transcoding means (10) are provided, associated with the memory (11) and intended to compress and decompress the facsimiles data, and stored facsimiles data selection means integrated within the supervisory block (7).

4. Portable radio telephone according to one of Claims 1 to 3, in which there is provided a display screen (13) and the supervisory block (7) is designed to display on the screen (13) the data from the memory (11, 16).

5. Portable radio telephone according to Claim 4, in which the input means (14) are provided with means (15) for, under the supervision of the supervisory block (7), making the documents scroll on the screen (13).

6. Portable radio telephone according to one of Claims 1 to 5, in which the facsimiles data processing block (100) comprises means for modifying facsimiles comprising an editing sub-block (12) associated with the supervisory block (7), with the screen (13), with the input means (14) and with the facsimiles data storage memory (11, 16).

7. Portable radio telephone according to one of Claims 1 to 6, in which the facsimiles data processing block (100) comprises means for creating facsimiles comprising an editing sub-block (12) associated with the supervisory block (7), with the screen (13), with the input means (14) and with the facsimiles data storage memory (11, 16).

8. Portable radio telephone according to one of Claims 1 to 7, in which the facsimiles data processing block (100) comprises means (14) for deleting facsimiles data from the memory (11, 16).
